# EUROPEAN PATENT SPECIFICATION

(11) **EP 0 392 565 B1**
(45) Date of publication and mention of the grant of the patent: **15.03.2000**
(21) Application number: 90107265.2
(22) Date of filing: 17.04.1990
(51) Int. Cl.: G06F 13/42

(54) **System bus control system**
Steuerungssystem für Systembus
Système de commande pour bus de système

(30) Priority: 14.04.1989 JP 9608089
(43) Date of publication of application: 17.10.1990
(73) Proprietor: SHARP KABUSHIKI KAISHA, Osaka-shi, Osaka-fu 545-0013 (JP)
(72) Inventor: Sakamoto, Masafumi, Sumoto-shi, Hyogo-ken (JP); Murano, Keiji, Nara-shi, Nara-ken (JP)
(74) Representative: Müller, Frithjof E., Dipl.-Ing.

(56) References cited:
- EP-A- 0 051 920
- EP-A- 0 081 961
- US-A- 4 463 440

## Description

### BACKGROUND OF THE INVENTION

### Field of the Invention

The present invention relates to a combination of a system bus with a master system and slave systems including a system bus control system used for controlling data transmission between the master system and the slave systems connected by said system bus and to a method of controlling data transmission in a system having said combination.

### Description of the Prior Art

Conventionally, as a system bus control system of the above type, there has been known such a system that a master system sends a series of data transferring strobe signals for designating the data transferring timing corresponding to respective slave systems. Upon receipt of the data transferring strobe signal corresponding to the slave systems respectively, the slave system which has received the corresponding strobe signal starts count an accessing time, and after the accessing time has been counted, a data transferring replying signal is outputted from the slave system to the master system.

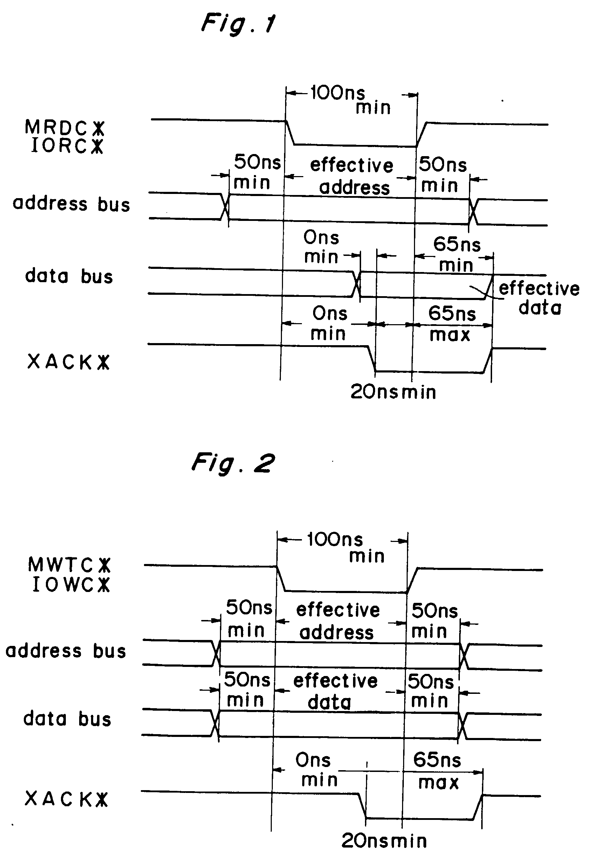

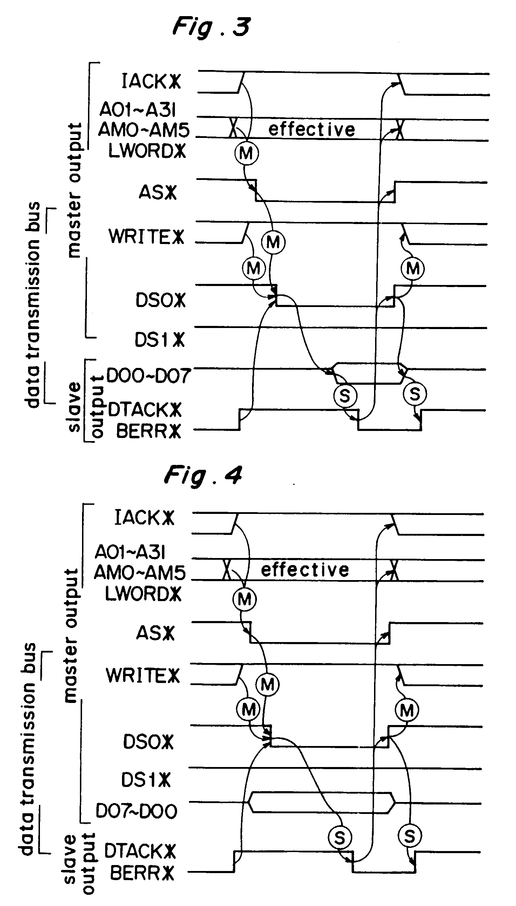

Figs. 1 and 2 show the read timing and write timing of the multi bus employed in the conventional system bus control system mentioned above. Figs. 3 and 4 show the timing in a one-Byte read cycle and the timing in a one-Byte write cycle at the VME bus employed in the conventional system bus control system.

The data transferring strobe signals are shown by MRDC* and IORC* in Fig. 1, MWTC* and IOWC* in Fig. 2 and DS0* and DS1* in Figs. 3 and 4. The data transferring and replying signals are shown by XACK* in Figs, 1 and 2, DTACK* and BERR* in Figs. 3 and 4. In Figs. 3 and 4, IACK*shows interrupt acknowledge signal, A01 to A31, AM0 to AM5 and LWORD* show address data, AS* shows an address strobe signal representing the decision of the address, WRITE* shows read/write signal and D00 to D07 show the transferring data.

When the master system outputs the data transferring strobe signal to the slave systems and the corresponding data transferring strobe signal is received by the slave system, which outputs the data transfer and replying signal to the master system after the data accessing time has been counted.

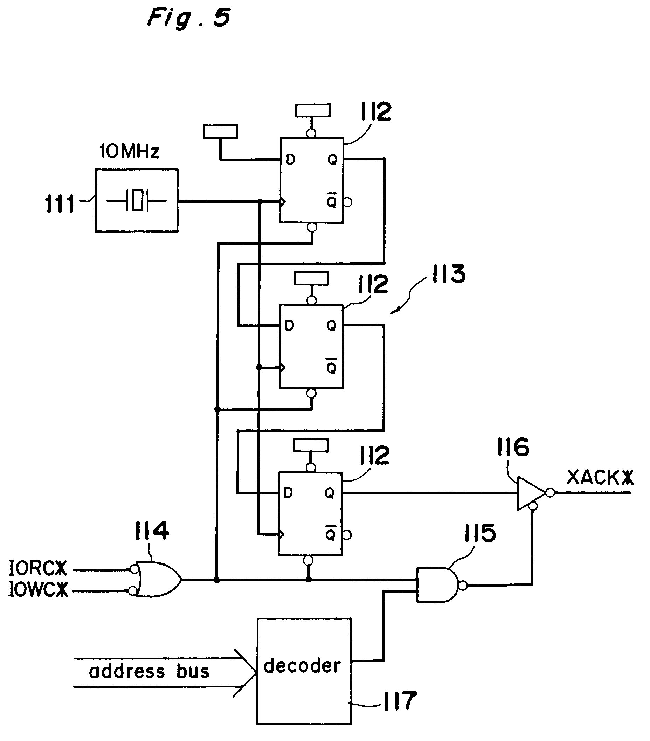

Fig. 5 shows an example of a conventional circuit arrangement of a data transferring and replying signal unit used in the slave system of the access time of 200 nano seconds.. The data transferring and replying signal unit comprises a 10MHz clock generator 111, a shift register 113 having three flip-flops 112, an OR gate 114, an AND gate 115, a tri-state output gate 116 and a decode circuit 117. In the circuit arrangement mentioned above, when the data transferring strobe signal MRDC* or IORC* sown in Fig. 1 becomes active, or the data transferring strobe signal MWTC* or IOWC* in fig. 2 becomes active, the time counting is started, and after the time corresponding to the accessing time has been counted, the data transferring and replying signal XACK* is outputted.

In the conventional system bus control system, it is necessary to provide a circuit arrangement including a set of shift registers or a counter for counting the accessing time, therefore, there is such a problem that the circuit arrangement of the slave system is much complicated.

### SUMMARY OF THE INVENTION

An essential object of the present invention is to provide a system bus control system and a system bus control method in which the slave system does not require to provide any shift register or counter for counting the accessing time.

The above object is solved, according to the invention by a combination of a system bus connected with a master system and slave systems and including a system bus control system for controlling data transmission between said master system and a plurality of said slave systems through said system bus, wherein
said master system during a read and write cycle respectively outputs on said system bus address signals to read and write data from and to the slave systems and comprises a strobe signal generator for outputting on said system bus to said slave systems during the time of outputting a given address signal:
(1) a first strobe signal, the commencement of which is delayed so that it starts after said given address signal is stabilized, and
(2) a number of subsequent, sequential strobe signals, which are each commenced one by one with a predetermined time interval,
   said master system further comprising means for outputting during a write cycle data to be written to the addressed slave system;
   each slave system which has an access time which may vary from the access time of the other slave systems includes a data transferring and replying unit for receiving said address signal and said first strobe signal and at least one of said sequential, subsequent strobe signals from said system bus, and each of said slave systems during a write and read cycle of the master system is respectively reading data from and outputting data to said system bus such that, in response to an address signal which addresses a particular slave system and in response to said first strobe signal said addressed slave system outputs data to said system bus in a read cycle of said master system and said data transferring and replying unit of the addressed slave system, when it receives at least one of said subsequent, sequential strobe signals sends to said master system an answering signal which causes:
   said master system to read in said read cycle from said system bus said data as output by said addressed slave system,
   said strobe signal generator of said master system to temporarily terminate sending said first and all of said subsequent, sequential strobe signals, and
   said master system to terminate the address signal until said addressed slave system stops outputting its data to the system bus and its data transferring and replying unit renders the answering signal non-active in response to said termination of one of the first and subsequent, sequential strobe signals from the strobe signal generator of the master system, and wherein
   said master system further writes in its write cycle the data which it has already put out to the system bus in the addressed slave system at a time after the answering signal is turned to active (claim 1).

The above object is further solved by a method for controlling data transmission in a system in which a system bus is combined and connected with a master system and a plurality of slave systems, wherein
(a) said master system has a read and a write cycle for respectively reading and writing data and outputting to said system bus:
   i) an address signal,
   ii) a first strobe signal, the commencement of which is delayed so that it starts after said given address signal is stabilized, and
   iii) a number of subsequent sequential strobe signals, which are each commenced one by one with a predetermined time interval, and
   iv) during a write cycle data to be written to the addressed slave system, and
(b) each slave system has an access time which may vary from the access time of the other slave systems and is adapted to receive said address signal, said first strobe signal and at least one of the subsequent sequential strobe signals from said system bus and, during a write and read cycle of the master system, is respectively reading data from and outputting data to said system bus such that, in response to an address signal which addresses a particular slave system and in response to said first strobe signal said addressed slave system writes data to said system bus in a read cycle of said master system and, when said addressed slave system receives at least one of said subsequent sequential strobe signals, sends to said master system an answering signal which causes the master system to read in its read cycle from said system bus the data as output by said addressed slave system and to temporarily terminate sending said first and all of said subsequent, sequential strobe signals and to terminate the address signal until said addressed slave system stops outputting its data to the system bus and renders the answering signal non-active in response to said termination of one of said first and subsequent sequential strobe signals from the master system, and
   wherein said master system further writes in its write cycle the data which it has already put out to the system bus in the addressed slave system at a time after the answering signal is turned to active (claim 4).

Preferably, said number of subsequent, sequential strobe signals is determined such that the last of it is delayed from said first strobe signal by a time-period in excess of the slowest access time of said plurality of slave systems. Further, each of said plurality of slave systems includes an address decoder for determining whether the data from said system bus is addressed to said respective slave system.

In operation, the master system sends to the respective slave system the first strobe signal representing the data transferring timing and the of subsequent, sequential strobe signals, each being delayed from the first strobe signal by a predetermined period of time which corresponds to the access time. The addressed slave system outputs the answering signal to the master system when the addressed slave system receives one of said of subsequent, sequential strobe signals after receipt of the first strobe signal and sends the answering signal via the system bus to the master system. Therefore, there is no need to provide any counter or shift registers in the slave system for counting the access time.

### BRIEF EXPLANATION OF THE DRAWINGS

- Fig. 1: is a time chart for showing the write timing in the multi bus of the conventional system bus control system,
- Fig. 2: is a time chart for showing the read timing in the multi bus of the conventional system bus control system,
- Fig. 3: is a time chart for showing the timing in the VME bus in the read cycle in an example of a prior art,
- Fig. 4: is a time chart for showing the timing in the VME bus in the write cycle in the prior art,
- Fig. 5: is a circuit diagram of a conventional data transferring and replying unit,
- Fig. 6: is a time chart for showing the read timing in an embodiment of the system bus control system according to the present invention,
- Fig. 7: is a time chart for showing the write timing in the embodiment of Fig. 6,
- Fig. 8: is a circuit diagram of an embodiment of a strobe signal generating circuit for performing the time charts shown in Figs. 6 and 7,
- Fig. 9: is a state shift chart of the strobe signal in the embodiment of Fig. 8,
- Fig. 10: is a circuit diagram showing an embodiment of a data transferring and replying unit,
- Fig. 11: is a time chart for showing the data read timing in the embodiment using the data transferring and replying unit shown in Fig. 10, and
- Fig. 12: is a block diagram showing relation between the master system and the slave system for an embodiment of the present invention

### DETAILED DESCRIPTION OF THE PREFERRED EMBODIMENT

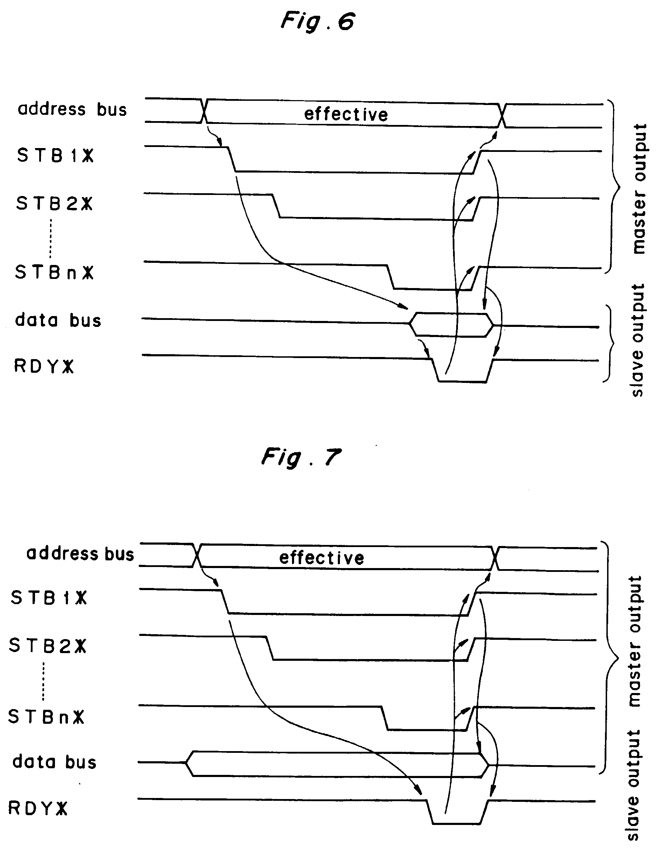

Referring to Fig. 6, the master system sends the address data to an address bus (not shown) and after the address data is stabilized, the master system makes the strobe signal STB1* active. Further the master system makes the respective strobe signals STB2*, STB3*, ... STBn* active sequentially one by one in the written order with a predetermined time period, for example, every 100 nano seconds. The last strobe signal STBn* is activated after such a time period that the access time of the slave system has passed from the activating time of STB1*. When the addressed slave system receives the strobe signal STB1*, the data of the slave system to be read by the master system is put out to the data bus. When the slave system receives the strobe signal STBn*, an answering signal RDY* is activated. Receiving the answering signal RDY*, the master system reads the data on the data bus and makes all of the strobe signals STB1* to STBn* non-active. Thereafter the master system stops outputting the address data. When the signal STB1* becomes non active, the slave system stops outputting the data to the data bus, and the signal "RDY*" is made non-active.

In Fig. 7, the master system writes the data which has already been outputted to the data bus by the slave system after the signal RDY* is turned to active. Other operations are the same as shown in Fig. 6.

Usually the access time of the slave system such as an I/O device or a memory is less than 300 nano seconds, therefore, if the time difference of the adjacent strobe signals is 100 nano seconds, it is sufficient to provide four strobe signals.

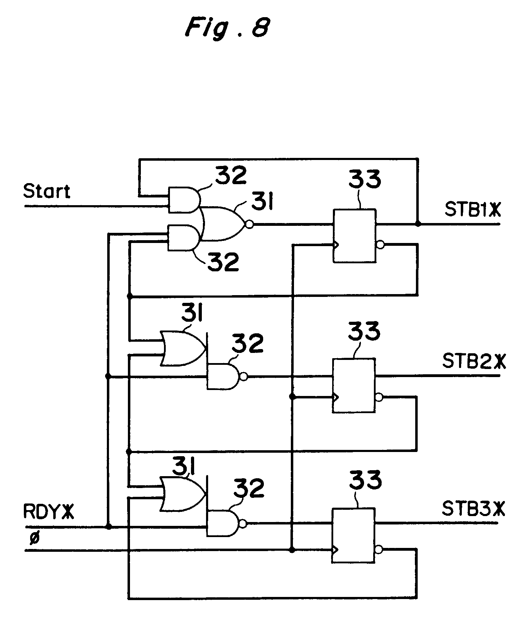

Fig. 8 shows a strobe signal generator for generating three strobe signals. The circuit shown in Fig. 8 comprises three OR gates 31, four AND gates 32 and three flip flops 33. With the bus use start signal "start" and clock signals φ, the respective strobe signals STB1*, STB2* and STB3* are sequentially activated in the order as described. When RDY* is activated, the strobe signals mentioned above are inactivated.

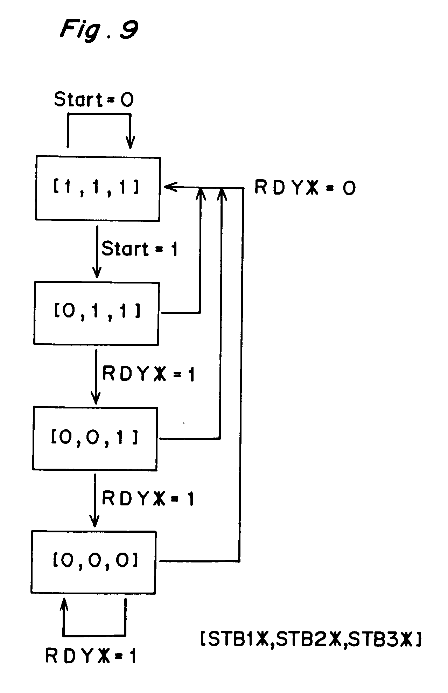

Fig. 9 shows state shifts of the circuit shown in Fig. 8. The states of the strobe signals [STB1*, STB2* and STB3*] are [1, 1, 1] when the signal START = 0. When the signal START changes to equal 1, the state changes to [0, 1, 1] (state of STB1* changes to zero). During the time period when START is non-active, that is when RDY* = 1, the subsequent strobe signals change from [0, 0, 1] to [0, 0, 0]. In the course of these state shifts as mentioned above, if the signal RDY* becomes 0, the original state can be restored.

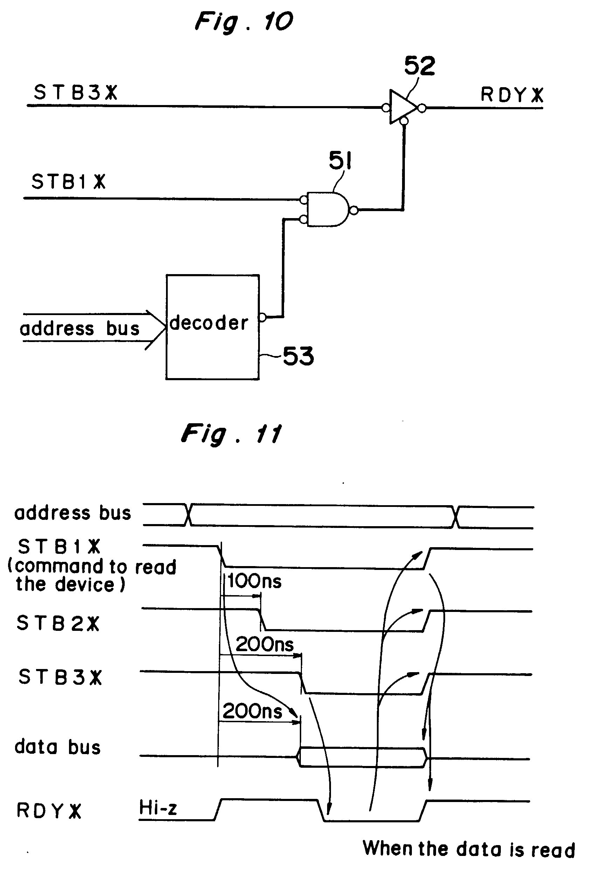

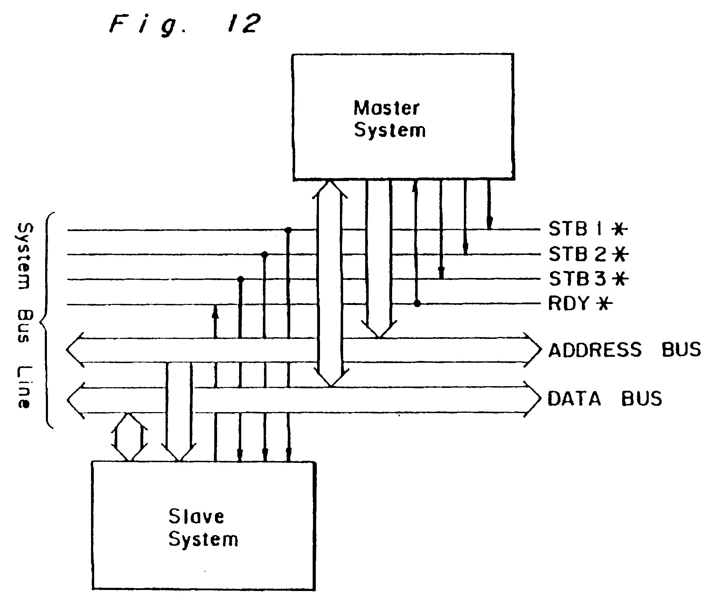

Fig. 10 shows a circuit diagram of a data transferring and replying unit of a slave system having an access time of 200 nano seconds and connected to a system bus which is operated with strobe signals having a time difference of 100 nano seconds and Fig. 11 shows its data reading timing. This circuit includes an AND gate 51, a tri-state output gate 52 and a decode circuit 53. When the first strobe signal STB1* becomes active, the output of the tri-state output gate 52 turns to a high impedance condition and outputs the signal "RDY*" of non-active. Upon receipt of the signal "STB3*", the signal "RDY*" is made active.

As shown in Fig. 10, the circuit arrangement of the data transferring and replying unit becomes remarkably simple compared to the conventional data transferring and replying unit as shown in Fig. 5.

As described above, according to the system bus control system of the present invention, since it is unnecessary to provide any shift register or counter for counting the accessing time in the slave system, the configuration of the slave system can be simplified.

## Claims

1. A combination of a system bus connected with a master system and slave systems and including a system bus control system for controlling data transmission between said master system and a plurality of said slave systems through said system bus, wherein
said master system during a read and write cycle respectively outputs on said system bus address signals to read and write data from and to the slave systems and comprises a strobe signal generator (Fig. 8, 31-33) for outputting on said system bus to said slave systems during the time of outputting a given address signal:
(1) a first strobe signal (STB1*), the commencement of which is delayed so that it starts after said given address signal is stabilized, and
(2) a number of subsequent, sequential strobe signals (STB2*...STBn*), which are each commenced one by one with a predetermined time interval,
said master system further comprising means for outputting during a write cycle data to be written to the addressed slave system;
each slave system which has an access time which may vary from the access time of the other slave systems includes a data transferring and replying unit (Fig. 10, 51-53) for receiving said address signal and said first strobe signal (STB1*) and at least one of said sequential, subsequent strobe signals (STB2*...STBn*) from said system bus, and each of said slave systems during a write and read cycle of the master system is respectively reading data from and outputting data to said system bus such that, in response to an address signal which addresses a particular slave system and in response to said first strobe signal (STB1*) said addressed slave system outputs data to said system bus in a read cycle of said master system and said data transferring and replying unit of the addressed slave system, when it receives at least one of said subsequent, sequential strobe signals (STB2*...STBn*) sends to said master system an answering signal (RDY*) which causes:
said master system to read in said read cycle from said system bus said data as output by said addressed slave system,
said strobe signal generator of said master system to temporarily terminate sending said first and all of said subsequent, sequential strobe signals (STB2*...STBn*), and
said master system to terminate the address signal until said addressed slave system stops outputting its data to the system bus and its data transferring and replying unit renders the answering signal (RDY*) non-active in response to said termination of one of the first and subsequent, sequential strobe signals from the strobe signal generator of the master system, and wherein
said master system further writes in its write cycle the data which it has already put out to the system bus in the addressed slave system at a time after the answering signal (RDY*) is turned to active.

2. The combination of claim 1, wherein said number of subsequent sequential strobe signals (STB2* ... STBn*),generated by said strobe signal generator is such that the last of it (STBn*) is delayed from said first strobe signal (STB1*) by a time period in excess of the slowest access time of said plurality of slave systems.

3. The combination of claim 1, wherein said data transferring and replying unit of each of said plurality of slave systems includes an address decoder (53) for determining whether the data from said system bus is addressed to the respective slave system.

4. A method for controlling data transmission in a system in which a system bus is combined and connected with a master system and a plurality of slave systems, wherein
(a) said master system has a read and a write cycle for respectively reading and writing data and outputting to said system bus:
i) an address signal,
ii) a first strobe signal (STB1*), the commencement of which is delayed so that it starts after said given address signal is stabilized, and
iii) a number of subsequent sequential strobe signals (STB2*...STBn*),which are each commenced one by one with a predetermined time interval, and
iv) during a write cycle data to be written to the addressed slave system, and
(b) each slave system has an access time which may vary from the access time of the other slave systems and is adapted to receive said address signal, said first strobe signal (STB1*) and at least one of the subsequent sequential strobe signals (STB2*...STBn*) from said system bus and, during a write and read cycle of the master system, is respectively reading data from and outputting data to said system bus such that, in response to an address signal which addresses a particular slave system and in response to said first strobe signal (STB1*) said addressed slave system writes data to said system bus in a read cycle of said master system and, when said addressed slave system receives at least one of said subsequent sequential strobe signals (STB2*...STBn*), sends to said master system an answering signal (RDY*) which causes the master system to read in its read cycle from said system bus the data as output by said addressed slave system and to temporarily terminate sending said first and all of said subsequent, sequential strobe signals and to terminate the address signal until said addressed slave system stops outputting its data to the system bus and renders the answering signal (RDY*) non-active in response to said termination of one of said first and subsequent sequential strobe signals from the master system, and
wherein said master system further writes in its write cycle the data which it has already put out to the system bus in the addressed slave system at a time after the answering signal (RDY*) is turned to active.

5. The method of claim 4, wherein said number of said subsequent sequential strobe signals is such that the last of it (STBn*) is delayed from said first signal (STB1*) by a time period in excess of the slowest access time of said plurality of slave systems.

## Patentansprüche

1. Kombination aus einem mit einem Mastersystem und Slavesystemen verbundenen Systembus und mit einem Steuerungssystem für den Systembus zum Steuern der Datenübertragung zwischen dem Mastersystem und mehreren der Slavesysteme über den Systembus, wobei
das Mastersystem während eines Lese- und Schreibzyklus auf den Systembus jeweils Adressensignale zum Lesen und Schreiben von Daten aus bzw. in die Slavesysteme ausgibt und es einen Bustaktsignalgenerator (Fig. 8, 31-33) aufweist, um während der Ausgabezeit eines vorgegebenen Adressensignals Folgendes auf dem Systembus an die Slavesysteme auszugeben:
(1) ein erstes Bustaktsignal (STB1*), dessen Beginn so verzögert ist, dass es startet, nachdem das vorgegebene Adressensignal stabilisiert ist; und
(2) eine Anzahl anschließender, sequenzieller Bustaktsignale (STB2*, ..., STBn*), die jeweils einzeln mit einem vorbestimmten Zeitintervall gestartet werden;
- wobei das Mastersystem ferner eine Einrichtung zum Ausgeben von in das adressierte Slavesystem einzuschreibenden Daten während eines Schreibzyklus aufweist;
- jedes Slavesystem, das eine Zugriffszeit aufweist, die von der Zugriffszeit der anderen Slavesysteme verschieden sein kann, eine Datenübertragungs- und Antworteinheit (Fig. 10, 51-53) zum Empfangen des Adressensignals und des ersten Bustaktsignals (STB1*) und mindestens eines der sequenziellen, anschließenden Bustaktsignale (STB2*, ..., STBn*) vom Systembus aufweist, und jedes der Slavesysteme während eines Schreib- und Lesezyklus des Mastersystems jeweils Daten vom Systembus liest und an diesen ausgibt, so dass das adressierte Slavesystem auf ein Adressensignal hin, das dieses spezielle Slavesystem adressiert, und auf das erste Bustaktsignal (STB1*) hin, in einem Lesezyklus des Mastersystems Daten auf den Systembus ausgibt, und die Datenübertragungs- und Antworteinheit des adressierten Slavesystems, wenn sie mindestens eines der anschließenden, sequenziellen Bustaktsignale (STB2*, ..., STBn*) empfangen hat, ein Antwortsignal (RDY*) an das Mastersystem liefert, das dafür sorgt, dass:
- das Mastersystem im genannten Lesezyklus die vom adressierten Slavesystem ausgegebenen Daten vom Systembus liest;
- der Bustaktsignalgenerator des Mastersystems zeitweilig das Senden des ersten und aller anschließenden, sequenziellen Bustaktsignale (STB2*, ..., STBn*) einstellt; und
- das Mastersystem das Adressensignal beendet, bis das adressierte Slavesystem die Ausgabe seiner Daten auf den Systembus beendet und seine Datenübertragungs- und Antworteinheit das Antwortsignal (RDY*) auf die Beendigung des ersten und/oder der anschließenden, sequenziellen Bustaktsignale vom Bustaktsignalgenerator des Mastersystems hin nichtaktiv macht; und wobei
- das Mastersystem ferner in seinem Schreibzyklus diejenigen Daten, die es bereits auf den Systembus ausgegeben hat, zu einem Zeitpunkt in das adressierte Slavesystem einschreibt, nachdem das Antwortsignal (RDY*) auf aktiv gebracht wurde.

2. Kombination nach Anspruch 1, bei der die Anzahl anschließender, sequenzieller Bustaktsignale (STB2*, ..., STBn*), wie sie vom Bustaktsignalgenerator erzeugt werden, dergestalt ist, dass das letzte derselben (STBn*) gegenüber dem ersten Bustaktsignal (STB1*) um eine Zeitperiode verzögert ist, die die längste Zugriffszeit der mehreren Slavesysteme überschreitet.

3. Kombination nach Anspruch 1, bei der die Datenübertragungs- und Antworteinheit jedes der mehreren Slavesysteme einen Adressendecodierer (53) aufweist, um zu ermitteln, ob die Daten vom Systembus an dieses jeweilige Slavesystem adressiert sind.

4. Verfahren zum Steuern der Datenübertragung in einem System, in dem ein Systembus mit einem Mastersystem und mit mehreren Slavesystemen kombiniert und verbunden ist, wobei
(a) das Mastersystem einen Lese- und einen Schreibzyklus zum jeweiligen Lesen und Schreiben von Daten aufweist, und um Folgendes an den Systembus auszugeben:
i) ein Adressensignal;
ii) ein erstes Bustaktsignal (STB1*), dessen Beginn so verzögert ist, dass es beginnt, nachdem das vorgegebene Adressensignal stabilisiert ist; und
iii) eine Anzahl anschließender, sequenzieller Bustaktsignale (STB2*, ..., STBn*), die jeweils einzeln mit einem vorbestimmten Zeitintervall beginnen; und
iv) in das adressierte Slavesystem zu schreibende Daten während eines Schreibzyklus; und
(b) jedes Slavesystem über eine Zugriffszeit verfügt, die von der Zugriffszeit der anderen Slavesysteme verschieden sein kann, und es so ausgebildet ist, dass es das Adressensignal, das erste Bustaktsignal (STB1*) und mindestens eines der anschließenden, sequenziellen Bustaktsignale (STB2*, ..., STBn*) vom Systembus empfängt und, während eines Schreib- und Lesezyklus des Mastersystems, Daten vom Systembus liest bzw. Daten an diesen ausgibt, so dass auf ein Adressensignal hin, das ein spezielles Slavesystem adressiert, und auf das erste Bustaktsignal (STB1*) hin das adressierte Slavesystem Daten in einem Lesezyklus des Mastersystems auf den Systembus schreibt, und dieses adressierte Slavesystem, wenn es mindestens eines der anschließenden, sequenziellen Bustaktsignale (STB2*, ..., STBn*) empfängt, ein Antwortsignal (RDY*) an das Mastersystem liefert, das dafür sorgt, dass das Mastersystem in seinem Lesezyklus die vom adressierten Slavesystem ausgegebenen Daten vom Systembus liest und zeitweilig das Liefern des ersten und aller anschließenden, sequenziellen Bustaktsignale beendet und das Adressensignal beendet, bis das adressierte Slavesystem die Ausgabe seiner Daten auf den Systembus beendet und das Antwortsignal (RDY*) auf die Beendigung des ersten und/oder der anschließenden, sequenziellen Bustaktsignale vom Mastersystem hin nicht-aktiv macht; und
- wobei das Mastersystem ferner in seinem Schreibzyklus diejenigen Daten, die es bereits auf den Systembus ausgegeben hat, zu einem Zeitpunkt in das adressierte Slavesystem einschreibt, nachdem das Antwortsignal (RDY*) auf aktiv gebracht wurde.

5. Verfahren nach Anspruch 4, bei dem die Anzahl der anschließenden, sequenziellen Bustaktsignale dergestalt ist, dass das letzte derselben (STBn*) gegenüber dem ersten Signal (STB1*) um eine Zeitperiode über der längsten Zugriffszeit der mehreren Slavesysteme verzögert ist.

## Revendications

1. Combinaison comportant un bus de système relié à un système maître et à des systèmes esclaves et comprenant un système de commande de bus de système pour commander la transmission de données entre ledit système maître et une multiplicité desdits systèmes esclaves par l'intermédiaire dudit bus de système, dans laquelle le système maître, au cours d'un cycle de lecture et d'écriture, délivre respectivement sur ledit bus de système des signaux d'adresse pour l'extraction de données à partir des systèmes esclaves et pour l'introduction de données dans ces derniers, et comporte un générateur de signaux de strobage (figure 8, 31-33) servant à délivrer sur ledit bus de système et à destination desdits systèmes esclaves au cours du temps d'émission d'un signal d'adresse donné :
(1) un premier signal de strobage (STB1*), dont le début est retardé de sorte qu'il commence une fois que ledit signal d'adresse donné est stabilisé ; et
(2) plusieurs signaux de strobage séquentiels, subséquents (STB2* ... STBn*), qui commencent chacun, un à un, suivant un intervalle de temps prédéterminé ;
ledit système maître comportant, an outre, des moyens pour délivrer, au cours d'un cycle d'écriture, des données à introduire dans le système esclave adressé ;
chaque système esclave qui a un temps d'accès qui peut différer du temps d'accès des autres systèmes esclaves comprend une unité de transfert de données et de réponse (figure 10, 51-53) servant à recevoir ledit signal d'adresse et ledit premier signal de strobage (STB1*), ainsi qu'au moins un desdits signaux de strobage subséquents, séquentiels (STB2* ... STBn*) en provenance dudit bus de système, et chacun desdits systèmes esclaves, au cours d'un cycle d'écriture et de lecture du système maître, extrait des données dudit bus de système et délivre des données à celui-ci, respectivement, de telle sorte que, en réponse à un signal d'adresse qui adresse un système esclave particulier et en réponse audit premier signal de strobage (STB1*), ledit système esclave adressé délivre des données audit bus de système au cours d'un cycle de lecture dudit système maître et ladite unité de transfert de données et de réponse du système esclave adressé, lorsqu'il reçoit au moins un desdits signaux de strobage séquentiels, subséquents (STB2* ... STBn*), envoie audit système maître un signal de réponse (RDY*) qui donne lieu aux opérations suivantes :
ledit système maître extrait dudit bus de système, au cours dudit cycle de lecture, lesdites données telles que délivrées par ledit système esclave adressé ;
ledit générateur de signaux de strobage dudit système maître met fin temporairement à l'envoi dudit premier signal de strobage et de tous lesdits signaux de strobage séquentiels, subséquents (STB2* ... STBn*); et
ledit système maître met fin au signal d'adresse jusqu'à ce que ledit système esclave adressé cesse de délivrer ses données au bus de système et à ce que son unité de transfert de données et de réponse rende le signal de réponse (RDY*) inactif en réponse à ladite fin de l'un des premier signal de strobage et signaux de strobage séquentiels subséquents en provenance du générateur de signaux de strobage du système maître ; et dans laquelle
ledit système maître introduit, en outre, au cours de son cycle d'écriture, les données qu'il a déjà délivrées au bus de système dans le système esclave adressé à un moment suivant celui auquel le signal de réponse (RDY*) est devenu actif.

2. Combinaison selon la revendication 1, dans laquelle ledit nombre de signaux de strobage séquentiels, subséquents (STB2* ... STBn*) générés par ledit générateur de signaux de strobage est tel que le dernier d'entre eux (STBn*) est retardé à partir dudit premier signal de strobage (STB1*) d'une période de temps supérieure au temps d'accès le plus long de ladite multiplicité de systèmes esclaves.

3. Combinaison selon la revendication 1, dans laquelle ladite unité de transfert de données et de réponse de chacun des systèmes de ladite multiplicité de systèmes esclaves comprend un décodeur d'adresses (53) servant à déterminer si les données en provenance dudit bus de système sont adressées au système esclave concerné.

4. Procédé de commande de la transmission de données dans un système dans lequel un bus de système est combiné avec un système maître et une multiplicité de systèmes esclaves, et est relié à ceux-ci, dans lequel
ledit système maître a un cycle de lecture et d'écriture pour extraire et pour écrire des données, respectivement, et pour délivrer audit bus de système :
(i) un signal d'adresse ;
(ii) un premier signal de strobage (STB1*) dont le début est retardé de sorte qu'il commence après la stabilisation dudit signal d'adresse donné ;
iii) plusieurs signaux de strobage séquentiels, subséquents (STB2* ... (STBn*), qui commencent chacun un à un suivant un intervalle de temps prédéterminé ; et
iv) au cours d'un cycle d'écriture, des données à introduire dans le système esclave adressé ; et
(b) chaque système esclave a un temps d'accès qui peut différer du temps d'accès des autres systèmes esclaves, et il est adapté pour recevoir ledit signal d'adresse, ledit premier signal de strobage (STB1*) et au moins l'un des signaux de strobage séquentiels, subséquents (STB2* ... STBn*) en provenance dudit bus de système et, au cours d'un cycle d'écriture et de lecture du système maître, extrait des données dudit bus de système et délivre des données a ce dernier, respectivement, de telle sorte que, en réponse à un signal d'adresse qui adresse un système esclave particulier, et en réponse audit premier signal de strobage (STB1*), ledit système esclave adressé introduit des données dans ledit bus de système au cours d'un cycle de lecture dudit système maître et, lorsque ledit système esclave adressé reçoit au moins un desdits signaux de strobage séquentiels, subséquents (STB2* ... STBn*), il envoie audit système maître un signal de réponse (RDY*) qui amène le système maître à extraire dudit bus de système, au cours de son cycle de lecture, les données telles que délivrées par ledit système esclave adressé et à mettre fin temporairement à l'envoi dudit premier signal de strobage et de tous lesdits signaux de strobage séquentiels, subséquents, et à mettre fin au signal d'adresse jusqu'à ce que ledit système esclave adressé cesse de délivrer ses données au bus de système et à ce qu'il rende le signal de réponse (RDY*) inactif en réponse à ladite fin de l'un desdits premier signal de strobage et signaux de strobage séquentiels, subséquents en provenance du système maître ; et
dans lequel ledit système maître introduit, en outre, au cours de son cycle d'écriture, les données qu'il a déjà délivrées au bus de système dans le système esclave adressé à un moment suivant celui auquel le signal de réponse (RDY*) est devenu actif.

5. Procédé selon la revendication 4 dans lequel ledit nombre desdits signaux de strobage séquentiels, subséquents est tel que le dernier d'entre eux (STBn*) est retardé à partir dudit premier signal (STB1*) d'une période de temps supérieure au temps d'accès le plus long de ladite multiplicité de systèmes esclaves.
